# EUROPEAN PATENT SPECIFICATION

(11) **EP 3 807 566 B1**
(45) Date of publication and mention of the grant of the patent: **21.08.2024**
(21) Application number: 19735409.5
(22) Date of filing: 18.06.2019
(51) Int. Cl.: F16L 37/098, F16L 37/12

(54) **QUICK COUPLING JOINING KIT FOR IRRIGATION HOSES**
VERBINDUNGSKIT MIT SCHNELLKOPPLUNG FÜR BEWÄSSERUNGSSCHLÄUCHE
KIT D'ASSEMBLAGE À COUPLAGE RAPIDE POUR TUYAUX D'IRRIGATION

(30) Priority: 18.06.2018 IT 201800006430
(43) Date of publication of application: 21.04.2021
(73) Proprietor: Den Di De Nora, Paolo, 40053 Valsamoggia (BO) (IT)
(72) Inventor: DE NORA, Paolo, 40033 Casalecchio di Reno (BO) (IT)
(74) Representative: Milli, Simone
(86) International application number: PCT/IB2019/055090
(87) International publication number: WO 2019/244025

(56) References cited:
- EP-A1- 0 340 518
- EP-B1- 0 340 518
- DE-U1- 29 719 415
- US-B1- 6 467 816

## Description

### Technical field

This invention relates to a quick coupling joining kit for irrigation hoses.

### Background art

Kits are widely known for joining or coaxial connection of portions of hose or for connection between a portion of hose and tools or devices for distributing fluid (water) in gardens.

These connecting kit always comprise a pair of terminals consisting of a so-called male body and a female body which are coupled together in a snap-on fashion for connecting one portion of hose to another or to a device for the passage of water.

These terminals forming the kit consist of the following:
- a male body, with a tubular cross-section and having a longitudinal axis of extension, comprising a first portion configured to be able to associate with the end of a first portion of hose for passage of a fluid or to a working device (for example, but not limitedly, to a water sprayer or to a source of water such as a tap) and a second cylindrical protruding portion or connector with a head end with a diameter larger than the remaining diameter of the connector;
- a female body, with a tubular cross-section and having a longitudinal axis of extension, comprising a first portion configured to be able to associate with the end of a second portion of hose and a second snap-on coupling portion, which can be removed from the connector of the male body.

The second portion of the female element comprises an outer cylindrical body or sleeve surrounding an inner tubular body having a seat for stable housing of the connector of the male body.

The sleeve is provided, internally, with a plurality of elastic plates, angularly equidistant from each other (usually four) and which extend, inclined with respect to the longitudinal axis of extension, starting from the inner surface of the sleeve to the centre of the sleeve to define a partial narrowing of the housing seat of the connector.

The sleeve is also configured to be able to slide axially in both directions relative to the inner tubular body and parallel to the longitudinal axis of extension.

The connector, in order to obtain the quick coupling, is axially inserted in the female body and determines, by means of the head end, the bending of the plates towards the inner surface of the sleeve.

The subsequent feeding of the head of the connector into the housing seat of the tubular body allows the plates to elastically return to the original position until making contact with a portion of the connector after the enlarged head so as to define a block of the female-male coupling.

In order to obtain the release between the male body and the female body it is necessary to slide the sleeve towards the portion of the female body associated with the portion of hose in such a way as to move backwards the plates which, by bending again outwards, allow the extraction of the connector from the housing seat.

This system, although relatively safe with regard to the seal of the connections between the two components, has several drawbacks.

The circumferential locking obtained elastically with the plates free to bend inside the sleeve tends to reduce with over time and in particular due to the pressures of the fluid in transit which generate significant radial forces and due to the coupling and uncoupling cycles between the male body and the female body.

These two components are able to plastically deform the plates so as to determine a reduction in the opposing force of the plates on the connector with a consequent uncoupling between the male and female body during use, that is, during the passage of the fluid.

Document DE29719415 shows a quick coupling connector made up by a first internal coupling bushing and a external bushing which has a plurality of radially elastic elements defining C-shape seat for the interaction with a narrowing element defined by the first internal coupling bushing. Once the connector is inserted inside the first bushing, it acts on the radially elastic elements and on the narrowing element, which interacts each other and with the connector in order to block the same connnector inside the first internal coupling bushing.

### Disclosure of the invention

The aim of this invention is to provide a quick coupling joining kit for irrigation hoses which overcomes the above-mentioned drawbacks of the prior art.

In particular, the aim of the invention to provide a quick coupling joining kit for irrigation hoses which is able to constantly ensure the locking of the coupling between the terminals.

A further aim of the invention is to provide a quick coupling joining kit for irrigation hoses which is able to increase the safety whilst maintaining unchanged the dimensions and overall sizes of the terminals and the overall cost of the kit.

These aims are fully achieved by the quick coupling joining kit for irrigation hoses according to this invention as characterised in the appended claims.

### Brief description of the drawings

The features of the invention will become more apparent from the following detailed description of a preferred, non-limiting embodiment of it, illustrated by way of example in the accompanying drawings, in which:
- Figure 1 illustrates a side cross-section view of a quick coupling joining kit for irrigation hoses according to the invention, in a first non-operating configuration;
- Figure 2 illustrates an enlarged detail of Figure 1;
- Figure 3 illustrates a side cross-section view of a quick coupling joining kit for irrigation hoses according to the invention, in a second intermediate coupling configuration;
- Figure 4 illustrates an enlarged detail of Figure 3;
- Figure 5 illustrates a side cross-section view of the quick coupling joining kit for irrigation hoses according to the invention, in a third coupling configuration;
- Figure 6 illustrates an enlarged detail of Figure 5.

### Detailed description of preferred embodiments of the invention

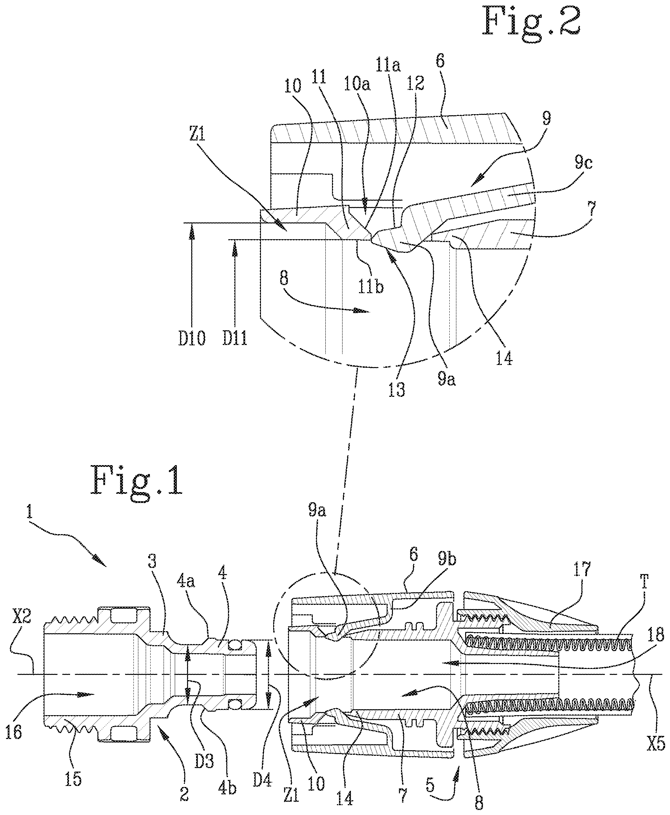

With reference to the accompanying drawings, and with particular reference to Figures 1, 3 and 5, the quick coupling joining kit according to the invention, labelled 1 in its entirety, is used for the coaxial joining or connection of portions of hose (partly visible in the Figures and labelled T) or for connection between a portion of hose and tools or devices for distributing fluid (water) in gardens, or also for connection between a portion of hose and a fluid source.

As illustrated, the quick coupling joining kit 1 comprises a male body 2 having a first axis X2 of longitudinal extension and comprising a protruding cylindrical portion or connector 3 with an end head 4 having a diameter D4 larger than the diameter D3 of the remaining portion of the connector 3. The male body 2 also has a cylindrical rear portion 15 equipped with joining means (for example, an outer thread with a portion of hose or a nebulising device or a tap).

The male body 2 also has an open channel 16 for free passage of the fluid along the first axis X2 of longitudinal extension.

Still as illustrated, the kit 1 comprises a female body 5, having a second axis X5 of longitudinal extension.

The female body 5 comprises a sleeve 6 surrounding an inner tubular body 7 having a seat 8 for stable housing of the connector 3 of the male body 2.

The sleeve 6 is internally equipped with a plurality of elastically yieldable plates 9 for locking, in use, the connector 3 inside the housing seat 8. Each plate 9 extends at an angle to the second axis X5 of longitudinal extension to define a partial narrowing of the seat 8 for housing the connector 3.

Each plate 9 has its free head end 9a facing towards a zone Z1 for entrance of the connector 3 into the female body 5.

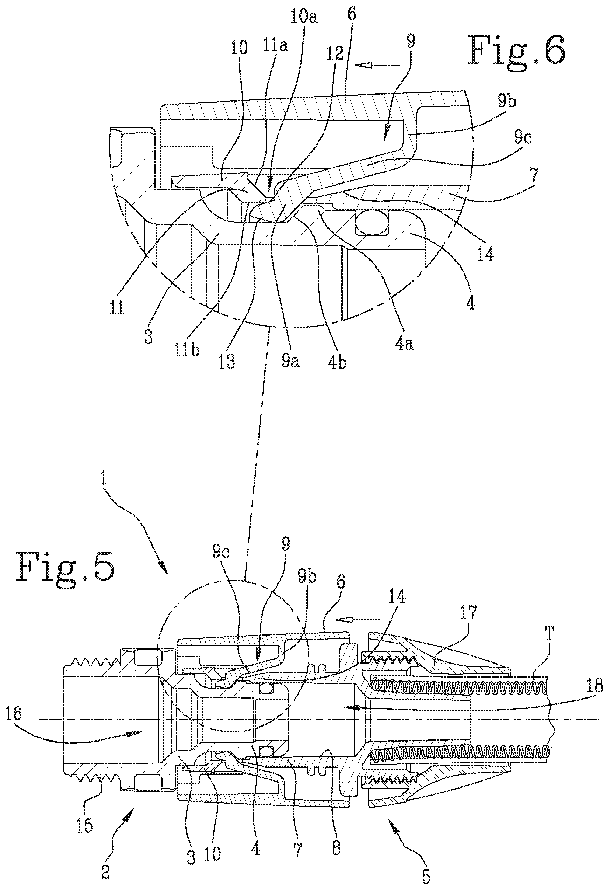

As illustrated, the sleeve 6 is slidable axially in both directions relative to the inner tubular body 7 and parallel to the second axis X5 of longitudinal extension between at least one first advanced position for locking the connector 3 housed in the seat 8 (Figure 5), with the heads 9a of the plates 9 in contact and contrasting with the connector 3, and a second backwards position for releasing the connector 3 from the housing seat 8 (Figure 1) wherein the heads 9a of the plates 9 are spaced from the connector 3.

Preferably, but not limitedly, there are four plates 9 angularly equidistant one another around the sleeve 6.

It should be noted that the female body 5 has a rear portion 17 equipped with means for joining with the portion of hose T partly made on the inner tubular body 7.

The female body 5 also forms a single through channel 18 from the zone Z1 for entrance of the connector 3 to the rear portion 17.

As illustrated, the female body 5 comprises a bushing 10 defining an extension of the inner tubular body 7 and protruding in the proximity of the zone Z1 for entrance of the connector 3.

The bushing 10 has a plurality of through openings 10a in each of which at least the head 9a of a corresponding plate 9 is engaged.

Moreover, the bushing 10 has an annular narrowing for contact with the head 9a of each plate 9.

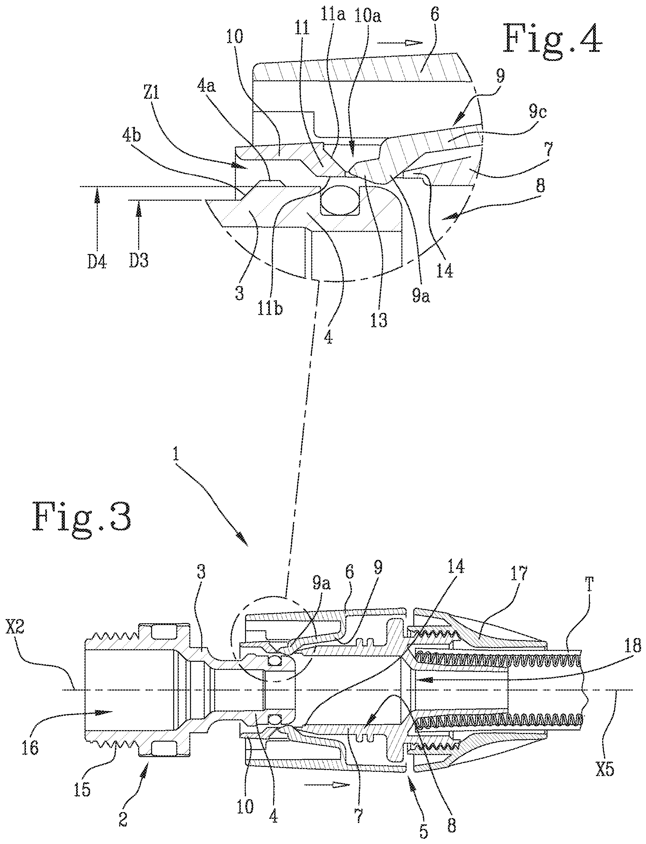

The annular narrowing is configured in such a way as to guide the movement of the plates 9 and of the sleeve 6 between a third, partly backwards, intermediate position of the sleeve 6 (Figures 3 and 5), at the entrance of the connector 3, with the head 9a of the plates 9 at least partly above the openings 10a of the bushing 10, and the first advanced locking position of the sleeve 6 (Figures 5 and 6), at the housing of the connector 3, with the head 9a of the plates 9 stably interposed between the connector 3 and the annular narrowing of the bushing 10.

In other words, the presence of the bushing 10 with the relative openings 10a and the annular narrowing allow the plates 9 to "pre-load" the sleeve 6, during the entrance of the connector 3, through a relative partial movement backwards deriving from the bending and from the movement of the plates 9 which, with the corresponding head 9a, rises and retracts by the contact with the annular narrowing.

The subsequent passage and housing of the connector 3 in the seat 8 of the tubular body 7 determines an elastic return of the plates 9 and, consequently, a forward step of the sleeve 6 (which returns to the first advanced locked position) allowing the fitting of the head 9a of each plate 9 between the rear portion of the connector 3 and the annular narrowing of the bushing 10.

This system therefore maintains a stable (but removable) locking between the male body 2 and the female body 5 with a high axial and radial resistance during the flow of fluid, thanks to the bilateral coupling of the heads 9a of the plates 9.

In order to release the coupling between the male body 2 and the female body 5, the complete backwards movement of the sleeve 6 is carried out so as to allow the heads 9a of each plate 9 to come out from the locking zone between annular narrowing and connector 3, thus allowing the connector 3 to escape from the seat 7 and from the female element 5. Preferably, the annular narrowing consists of an enlarged annular wall 11 of the bushing 10.

In light of this, the annular wall 11 has a diameter D11 smaller than the diameter D10 of the remaining part of the bushing 10.

As illustrated, the annular narrowing has a shape with an inclined in cross-section forming an annular wall 11 which converges towards the second axis X5 of longitudinal extension of the female body 5.

The annular wall 11 has a first outer surface 11a, inclined relative to the second axis X5 and facing the sleeve 6, and in contact and contrasting with the head 9a of each plate 9 in the third intermediate position of the sleeve 6.

In light of this, the annular wall 11 has a second central connecting surface 11b, parallel to the second axis X5, of abutment with the head 9a of each plate 9 in the first locked position of the sleeve 6.

In practice, the wall 11 has two surfaces 11a and 11b which, together, form a tip leading with a twofold function:
- retaining the head 9a of each plate 9 when the connector 3 is housed (Figure 6);
- defining the maximum lifting point of the plates 9 (by contact with the heads 9a) with the female body 5 free from the connector 3; this is important in order to ensure the lifting movement of the heads 9a during the entrance of the connector 3.

In addition to this, at least the first surface 11a interacts (as a cam profile) on the head 9a of each plate 9 to allow, further tothe lifting of the plates 9, the pushing of the plates 9 onto the sleeve 6 (without external aid) for the intermediate pre-loading position.

Preferably, each plate 9 has the end head 9a defined by a enlargement comprising a tip vertex formed, in cross-section, by two surfaces 12, 13 inclined and divergent from each other.

A first outer surface 13 interacting in a guided sliding fashion with the annular narrowing (in particular, the first outer surface 11a of the annular wall 11) at the third intermediate position of the sleeve 6.

A second inner surface 13 interacting as a guide and as abutment with the annular narrowing (in particular the second surface 11b of the annular wall 11), in the first locking position of the sleeve 6, and also with the connector 3 for the releasing of the connector 3 in the second released position.

It should be noted that each head 9a has the second surface 13 formed by two undulating portions (forming two half-lobes) joined in a recess zone which is engaged by the vertex formed by the two surfaces 11a and 11b of the annular wall 11 in the locked position shown in Figure 6.

Preferably, each plate 9 has a body consisting of a first rigid portion 9b for joining with the sleeve 6, positioned perpendicular relative to the second axis X5, and a second flexible portion 9c, extending at an angle relative to the second axis X5, connected to the first rigid portion 9b, and having the end head 9a at the relative end.

The first rigid portion 9b allows to transmit the thrust of the head 9a (when lifting and partially bending during the entrance of the connector 3) to slide the sleeve 6 into the third intermediate position.

Preferably, the connector 3 has a head 4 (distal) comprising a first portion of stable housing in the seat 8 for housing the inner tubular body 7, a second portion (intermediate) comprising an annular enlargement 4a with larger diameter D4 and with an inclined annular surface 4b for connection with the remaining portion (proximal) of the connector 3.

The inclined connection surface 4bis, in use, in sliding contact with a part of the head 9a of each plate 9 in the first locked position.

The head 9a has a corresponding rear surface in contact with the inclined connection surface 4b with an angle of inclination equal to the angle of inclination of the inclined surface 4b (of annular type and preferably at an angle of 45°): this allows the head 9a of each plate 9 to be removed correctly, during the sliding movement of the sleeve 6 without the risk of locking.

Preferably, the bushing 10 has an annular portion 14 for connection with the remaining tubular body 7 formed by an extension defining also the rear closed side of the openings 10a of passage of the plates 9.

In light of this, the annular wall 11 of the bushing 10 also forms a front closed side of the openings 10a for the passage of the plates 9 of the bushing 10.

A quick coupling kit structured in this way achieves the preset aims thanks to an extremely practical and safe locking system, maintaining substantially unchanged the overall dimensions of the bodies forming the kit and also the overall costs of the kit.

## Claims

1. A quick coupling joining kit for irrigation hoses, the kit (1) comprising at least:
- a male body (2) having a first axis (X2) of longitudinal extension and comprising a protruding cylindrical portion or connector (3) with an end head (4) having a diameter (D4) larger than the diameter (D3) of the remaining portion of the connector (3);
- a female body (5), having a second axis (X5) of longitudinal extension, and comprising a sleeve (6) surrounding an inner tubular body (7) having a stable housing seat (8) for the connector (3) of the male body (2); the sleeve (6) being equipped, internally, with a plurality of plates (9) elastically yieldable for locking, in use, the connector (3) inside the housing seat (8); each plate (9) having an extension at an angle to the second axis (X5) of longitudinal extension to define a partial narrowing of the seat (8) for housing the connector (3); each plate (9) having the relative free end head (9a) facing towards a zone (Z1) for entrance of the connector (3) into the female body (5); the sleeve (6) being slidable axially in both directions with respect to the inner tubular body (7) and parallel to the second axis (X5) of longitudinal extension between at least a first advanced position for locking the connector (3) housed in the housing seat (8), with the heads (9a) of the plates (9) in contact and contrasting with the connector (3), and a second backwards position for releasing the connector (3) from the housing seat (8) wherein the heads (9a) of the plates (9) are moved away from the connector (3); wherein the female body (5) comprises a bushing (10) defining an extension of the inner tubular body (7) and protruding in the proximity of the zone (Z1) for entrance of the connector (3); the bushing (10) having an annular narrowing for contact with the head (9a) of each plate (9); and the bushing (10) has a plurality of through openings (10a) inside each of which is engaged at least the head (9a) of a corresponding plate (9) and wherein the annular narrowing has a shape, in cross-section, inclined to form an annular wall (11) converging towards the second axis (X5) of longitudinal extension of the female body (5) and being configured in such a way as to guide the movement of the plates (9) and of the sleeve (6) between a third intermediate partly backwards position of the sleeve (6), at the entrance of the connector (3), with the head (9a) of the plates (9) at least partly above the openings (10a) of the bushing (10), and the first advanced position for locking the sleeve (6), at the housing seat of the connector (3), with the head (9a) of the plates stably interposed between the connector (3) and the annular narrowing of the bushing (10); wherein each plate (9) has the end head (9a) defined by a enlargement comprising a tip vertex formed, in cross-section, by two surfaces (12, 13) inclined and divergent from each other; **characterized in that** a first outer surface (13) is interacting in a guided sliding fashion with the annular narrowing at the third intermediate position of the sleeve (6), and a second inner surface (12) is interacting in a guided and contact fashion with the annular narrowing in the first locked position of the sleeve (6), and with the connector (3) for releasing the connector (3) in the second released position,
wherein the annular narrowing has a shape, in cross-section, inclined to form an annular wall (11) converging towards the second axis (X5) of longitudinal extension of the female body (5); the annular wall (11) having a first outer surface (11a), inclined relative to the second axis (X5), facing the sleeve (6), and in contact and contrasting with the head (9a) of each plate (9) in the third intermediate position of the sleeve (6); the annular wall (11) having a second central surface (11b) of connection, parallel to the second axis (X5), in contact with the head (9a) of each plate (9) in the first position for locking the sleeve (6).

2. The joining kit according to claim 1, wherein the annular narrowing consists of an enlarged annular wall (11) of the bushing (10); the annular wall (11) having a diameter (D11) smaller than the diameter (D10) of the remaining part of the bushing (10).

3. The joining kit according to any one of the preceding claims, wherein the connector (3) has a head (4) comprising a first portion of stable housing in the seat (8) for housing the inner tubular body (7), a second portion comprising an annular enlargement (4a) with diameter (D4) and with an inclined annular surface (4b) for connection with the remaining portion of the connector (3); the inclined surface (4b) for connection being, in use, in sliding contact with a part of the head (9a) of each plate (9) in the first locked position.

4. The joining kit according to any one of the preceding claims, wherein each plate (9) has a body consisting of a first rigid portion (9b) for joining with the sleeve (6), positioned perpendicular relative to the second axis (X5), and a second flexible portion (9c), extending at an angle relative to the second axis (X5), connected to the first rigid portion (9b), and having at the relative end the end head (9a).

5. The joining kit according to any one of the preceding claims, wherein the bushing (10) has an annular portion (14) for connection with the remaining tubular body (7) formed by an extension defining also the rear closed side of the openings (10a) of passage of the plates (9).

6. The joining kit according to any one of claims 2 to 5, wherein the annular wall (11) of the bushing (10) also defines a front closed side of the through openings (10a) of the bushing (10).

## Patentansprüche

1. Verbindungskit mit Schnellkopplung für Bewässerungsschläuche (1), wobei das Kit mindestens Folgendes umfasst:
- einen männlichen Körper (2), der eine erste Längserstreckungsachse (X2) aufweist und einen vorstehenden zylindrischen Abschnitt oder Verbinder (3) mit einem Endkopf (4) umfasst, der einen Durchmesser (04) aufweist, der größer als der Durchmesser (03) des verbleibenden Abschnitts des Verbinders (3) ist;
- einen weiblichen Körper (5), der eine zweite Längserstreckungsachse (X5) aufweist und eine Hülse (6) umfasst, die einen inneren rohrförmigen Körper (7) umgibt, der einen stabilen Aufnahmesitz (8) für den Verbinder (3) des männlichen Körpers (2) aufweist; wobei die Hülse (6) innen mit einer Vielzahl von Platten (9) ausgestattet ist, die elastisch nachgiebig sind, um den Verbinder (3) im Gebrauch im Inneren des Aufnahmesitzes (8) zu verriegeln; wobei eine jede Platte (9) eine Erstreckung in einem Winkel zur zweiten Längserstreckungsachse (X5) aufweist, um eine teilweise Verengung des Sitzes (8) zur Aufnahme des Verbinders (3) zu definieren; wobei der relative freie Endkopf (9a) einer jeden Platte (9) einer Zone (Z1) für den Eintritt des Verbinders (3) in den weiblichen Körper (5) zugewandt ist; wobei die Hülse (6) in beide Richtungen in Bezug auf den inneren rohrförmigen Körper (7) axial und parallel zur zweiten Längserstreckungsachse (X5) zwischen mindestens einer ersten vorgeschobenen Position zum Verriegeln des Verbinders (3), der in dem Aufnahmesitz (8) untergebracht ist, wobei die Köpfe (9a) der Platten (9) in Kontakt und mit dem Verbinder (3) kontrastierend sind, und einer zweiten Rückwärtsposition zum Lösen des Verbinders (3) vom Aufnahmesitz (8), in der die Köpfe (9a) der Platten (9) vom Verbinder (3) wegführend bewegt werden, verschiebbar ist; wobei der weibliche Körper (5) eine Buchse (10) umfasst, die eine Erstreckung des inneren rohrförmigen Körpers (7) definiert und in der Nähe der Zone (Z1) für den Eintritt des Verbinders (3) hervorsteht; wobei die Buchse (10) eine ringförmige Verengung für den Kontakt mit dem Kopf (9a) einer jeden Platte (9) aufweist; die Buchse (10) weist eine Vielzahl von Durchgangsöffnungen (10a) auf, in deren Inneren jeweils mindestens der Kopf (9a) einer entsprechenden Platte (9) eingreift und wobei die ringförmige Verengung im Querschnitt eine Form aufweist, die geneigt ist, um eine ringförmige Wand (11) zu bilden, die in Richtung der zweiten Längserstreckungsachse (X5) des weiblichen Körpers (5) konvergiert und derart ausgelegt ist, um die Bewegung der Platten (9) und der Hülse (6) zwischen einer dritten teilweise nach hinten gerichteten Zwischenposition der Hülse (6) am Eintritt des Verbinders (3), wobei sich der Kopf (9a) der Platten (9) mindestens teilweise über den Öffnungen (10a) der Buchse (10) befindet, und der ersten vorgeschobenen Position zum Verriegeln der Hülse (6) am Aufnahmesitz des Verbinders (3) zu führen, wobei der Kopf (9a) der Platten stabil zwischen dem Verbinder (3) und der ringförmigen Verengung der Buchse (10) angeordnet ist; wobei der Endkopf (9a) einer jeden Platte (9) durch eine Erweiterung definiert ist, die einen Scheitelpunkt an der Spitze umfasst, der im Querschnitt durch zwei Flächen (12, 13) gebildet ist, die geneigt und voneinander abweichend sind; **dadurch gekennzeichnet, dass** eine erste Außenfläche (13) gleitend geführt mit der ringförmigen Verengung an der dritten Zwischenposition der Hülse (6) zusammenwirkt, und eine zweite Innenfläche (12) geführt und berührend mit der ringförmigen Verengung in der ersten verriegelten Position der Hülse (6) und mit dem Verbinder (3) zum Lösen des Verbinders (3) in der zweiten freigegebenen Position zusammenwirken,
wobei die ringförmige Verengung im Querschnitt eine Form aufweist, die geneigt ist, um eine ringförmige Wand (11) zu bilden, die in Richtung der zweiten Längserstreckungsachse (X5) des weiblichen Körpers (5) konvergiert; wobei die ringförmige Wand (11) eine erste Außenfläche (11a) aufweist, die relativ zur zweiten Achse (X5) geneigt ist, die der Hülse (6) zugewandt ist und mit dem Kopf (9a) einer jeden Platte (9) in der dritten Zwischenposition der Hülse (6) in Kontakt und damit kontrastierend ist; wobei die ringförmige Wand (11) eine zweite zentrale Verbindungsfläche (11b) aufweist, die parallel zur zweiten Achse (X5) ist, die in der ersten Position mit dem Kopf (9a) einer jeden Platte (9) in Kontakt ist, um die Hülse (6) zu verriegeln.

2. Verbindungskit nach Anspruch 1, wobei die ringförmige Verengung aus einer vergrößerten ringförmigen Wand (11) der Buchse (10) besteht; wobei die ringförmige Wand (11) einen Durchmesser (D11) aufweist, der kleiner ist als der Durchmesser (D10) des restlichen Teils der Buchse (10) .

3. Verbindungskit nach einem der vorhergehenden Ansprüche, wobei der Verbinder (3) einen Kopf (4) aufweist, der einen ersten Abschnitt einer stabilen Aufnahme im Sitz (8) zur Aufnahme des inneren rohrförmigen Körpers (7), einen zweiten Abschnitt, umfassend eine ringförmige Erweiterung (4a) mit Durchmesser (04) und mit geneigter ringförmiger Fläche (4b) zum Verbinden mit dem restlichen Abschnitt des Verbinders (3) umfasst; wobei die geneigte ringförmige Fläche (4b) zum Verbinden im Gebrauch in Schiebekontakt mit einem Teil des Kopfes (9a) einer jeden Platte (9) in der ersten verriegelten Position ist.

4. Verbindungskit nach einem der vorhergehenden Ansprüche, wobei eine jede Platte (9) einen Körper aufweist, der aus einem ersten starren Abschnitt (9b) für das Verbinden mit der Hülse (6), der senkrecht zur zweiten Achse (X5) positioniert ist, und einem zweiten flexiblen Abschnitt (9c) besteht, der sich in einem Winkel zur zweiten Achse (X5) erstreckt, der mit dem ersten starren Abschnitt (9b) verbunden ist und am relativen Ende den Endkopf (9a) aufweist.

5. Verbindungskit nach einem der vorhergehenden Ansprüche, wobei die Buchse (10) einen ringförmigen Abschnitt (14) zum Verbinden mit dem restlichen rohrförmigen Körper (7) umfasst, der durch eine Verlängerung gebildet ist, die auch die hintere geschlossene Seite der Öffnungen (10a) des Durchgangs der Platten (9) definiert.

6. Verbindungskit nach einem der Ansprüche 2 bis 5, wobei die ringförmige Wand (11) der Buchse (10) auch eine vordere geschlossene Seite der Durchgangsöffnungen (10a) der Buchse (10) definiert.

## Revendications

1. Kit d'assemblage à couplage rapide pour tuyaux d'irrigation, le kit (1) comprenant au moins :
- un corps mâle (2) ayant un premier axe (X2) d'extension longitudinale et comprenant une portion cylindrique saillante ou connecteur (3) avec une tête d'extrémité (4) ayant un diamètre (04) supérieur au diamètre (03) de la portion restante du connecteur (3) ;
- un corps femelle (5), ayant un deuxième axe (X5) d'extension longitudinale, et comprenant un manchon (6) entourant un corps tubulaire interne (7) ayant un siège de logement stable (8) pour le connecteur (3) du corps mâle (2) ; le manchon (6) étant équipé, à l'intérieur, d'une pluralité de plaques (9) élastiquement flexibles pour verrouiller, en utilisation, le connecteur (3) à l'intérieur du siège de logement (8) ; chaque plaque (9) ayant une extension formant un angle avec le deuxième axe (X5) d'extension longitudinale pour définir un rétrécissement partiel du siège (8) pour le logement du connecteur (3) ; chaque plaque (9) ayant la tête d'extrémité libre relative (9a) tournée vers une zone (Z1) d'entrée du connecteur (3) dans le corps femelle (5) ; le manchon (6) pouvant coulisser axialement dans les deux directions par rapport au corps tubulaire interne (7) et parallèlement au deuxième axe (X5) d'extension longitudinale entre au moins une première position avancée pour verrouiller le connecteur (3) logé dans le siège du boîtier (8), avec les têtes (9a) des plaques (9) en contact et en contraste avec le connecteur (3), et une deuxième position arrière pour libérer le connecteur (3) du siège du boîtier (8) dans laquelle les têtes (9a) des plaques (9) sont éloignées du connecteur (3) ; dans lequel le corps femelle (5) comprend une douille (10) définissant un prolongement du corps tubulaire interne (7) et faisant saillie à proximité de la zone (Z1) d'entrée du connecteur (3) ; la douille (10) ayant un rétrécissement annulaire pour le contact avec la tête (9a) de chaque plaque (9) ; la douille (10) a une pluralité d'ouvertures traversantes (10a) à l'intérieur de chacune desquelles est engagée au moins la tête (9a) d'une plaque correspondante (9) et dans laquelle le rétrécissement annulaire a une forme, en section transversale, inclinée pour former une paroi annulaire (11) convergeant vers le deuxième axe (X5) d'extension longitudinale du corps femelle (5) et étant configurée de manière à guider le mouvement des plaques (9) et du manchon (6) entre une troisième position intermédiaire partiellement en arrière du manchon (6), à l'entrée du connecteur (3), avec la tête (9a) des plaques (9) au moins partiellement au-dessus des ouvertures (10a) de la douille (10), et la première position avancée de verrouillage du manchon (6), au niveau du siège de logement du connecteur (3), avec la tête (9a) des plaques interposée de manière stable entre le connecteur (3) et le rétrécissement annulaire de la douille (10) ; dans lequel chaque plaque (9) a la tête d'extrémité (9a) définie par un élargissement comprenant un sommet d'extrémité formé, en section transversale, par deux surfaces (12, 13) inclinées et divergentes l'une de l'autre ; **caractérisé en ce qu'**une première surface extérieure (13) interagit de manière coulissante guidée avec le rétrécissement annulaire à la troisième position intermédiaire du manchon (6), et une seconde surface intérieure (12) interagit de manière guidée et en contact avec le rétrécissement annulaire dans la première position verrouillée du manchon (6), et avec le connecteur (3) pour libérer le connecteur (3) dans la deuxième position libérée,
dans lequel le rétrécissement annulaire a une forme, en section transversale, inclinée pour former une paroi annulaire (11) convergeant vers le deuxième axe (X5) d'extension longitudinale du corps femelle (5) ; la paroi annulaire (11) ayant une première surface extérieure (11a), inclinée par rapport au deuxième axe (X5), tournée vers le manchon (6), et en contact et contrastant avec la tête (9a) de chaque plaque (9) dans la troisième position intermédiaire du manchon (6) ; la paroi annulaire (11) ayant une seconde surface centrale (11b) de connexion, parallèle au second axe (X5), en contact avec la tête (9a) de chaque plaque (9) dans la première position pour verrouiller le manchon (6).

2. Kit d'assemblage selon la revendication 1, dans lequel le rétrécissement annulaire consiste en une paroi annulaire élargie (11) de la douille (10) ; la paroi annulaire (11) ayant un diamètre (D11) inférieur au diamètre (D10) de la partie restante de la douille (10).

3. Kit d'assemblage selon l'une quelconque des revendications précédentes, dans lequel le connecteur (3) a une tête (4) comprenant une première portion de logement stable dans le siège (8) pour loger le corps tubulaire interne (7), une seconde portion comprenant un élargissement annulaire (4a) avec un diamètre (04) et avec une surface annulaire inclinée (4b) pour la connexion avec la portion restante du connecteur (3) ; la surface inclinée (4b) pour la connexion étant, en utilisation, en contact coulissant avec une partie de la tête (9a) de chaque plaque (9) dans la première position verrouillée.

4. Kit d'assemblage selon l'une quelconque des revendications précédentes, dans lequel chaque plaque (9) a un corps constitué d'une première portion rigide (9b) pour l'assemblage avec le manchon (6), positionnée perpendiculairement par rapport au second axe (X5), et d'une seconde portion flexible (9c), s'étendant selon un angle par rapport au second axe (X5), reliée à la première portion rigide (9b), et ayant à l'extrémité relative la tête d'extrémité (9a).

5. Kit d'assemblage selon l'une quelconque des revendications précédentes, dans lequel la douille (10) a une portion annulaire (14) pour la connexion avec le corps tubulaire restant (7) formé par une extension définissant également le côté fermé arrière des ouvertures (10a) de passage des plaques (9).

6. Kit d'assemblage selon l'une quelconque des revendications 2 à 5, dans lequel la paroi annulaire (11) de la douille (10) définit également un côté avant fermé des ouvertures traversantes (10a) de la douille (10) .
